# EUROPÄISCHE PATENTSCHRIFT

(11) **EP 0 514 369 B1**
(45) Veröffentlichungstag und Bekanntmachung des Hinweises auf die Patenterteilung: **05.03.1997**
(21) Anmeldenummer: 92890112.3
(22) Anmeldetag: 13.05.1992
(51) Int. Cl.: C04B 28/12

(54) **Baustein**
Building block
Bloc de construction

(30) Priorität: 14.05.1991 AT 985/91
(43) Veröffentlichungstag der Anmeldung: 19.11.1992
(73) Patentinhaber: Kranzinger, Norbert, A-5202 Neumarkt/Wallersee (AT)
(72) Erfinder: Kranzinger, Norbert, 5202 Neumarkt/Wallersee (AT); Gruber, Helmut, 5400 Hallein (AT)
(74) Vertreter: Hübscher, Heiner, Dipl.-Ing.

(56) Entgegenhaltungen:
- EP-A- 0 128 305
- DE-A- 1 471 400
- DE-A- 2 137 943
- DE-A- 3 816 686
- O. HENNING, D. Knöfel "Baustoffchemie", 2. Auflage, 1980, Verlag Bauverlag GmbH, Wiesbaden-Berlin

## Beschreibung

Die Erfindung bezieht sich auf einen Baustein, der nur aus einem wärmedämmenden Zuschlagstoff, vorzugsweise Naturbims, und einem hydraulischen Bindemittel unter Verwendung von hydraulischem Kalk besteht.

Bausteine aller Art weisen bisher meist Zement als Bindemittel auf. Zement wird bei etwa 1500° C gebrannt, so daß sich eine Sinterung der Bestandteile ergibt, wodurch ein Verdichten bzw. Insichabschließen des gebrannten Stoffes auftritt, was zu einer entsprechenden Gewichtserhöhung führt. Die Schüttdichte des Zementes beträgt durchschnittlich 1200 kg/m³. Abgesehen davon, daß das Brennen des Zementes bei hoher Temperatur einen entsprechend hohen Energieaufwand mit sich bringt, hat die Dichte des Zementes als Bindemittel einen Stoff mit dichtem, d. h. auch praktisch luftdichtem Gefüge zur Folge, dessen Wärmeleitfähigkeit entsprechend hoch ist, zumal meist Lufteinschlüsse bzw. Poren fehlen.

Es ist ferner üblich, Kalkstein zu brennen, doch wird der gebrannte Kalk in der Regel mit Wasser gelöscht und dann als Mörtel- oder Putzmaterial verwendet, weil ihm als Bindemittel für Bausteine die nötige Druckfestigkeit fehlt. Dabei handelt es sich um sogenannte Luftmörtel. Es ist zwar auch schon bekannt, einen hydraulischen Kalk, der auch unter Wasser ohne Aufnahme von Kohlensäure erstarrt, zu verwenden, wobei aber dem Kalk auch Zement, synthetischer Anhydrit, Gips, Kunstharz u. dgl. zugemischt wird, um eine plastische Dämmasse zu erreichen (DE-A-1 471 400). Eine solche Dämmasse vermag aber die Belastungen eines Bausteines überhaupt nicht aufzunehmen. Weiters ist es nicht mehr neu, ein Bindemittelgemisch zu verwenden, das außer hydraulischem Kalk noch einen wasserlöslichen Klebstoff auf der Basis von Methylcellulose enthält (DE-A-2 137 943). Auch in diesem Fall wird jedoch der hydraulische Kalk nicht zur Herstellung von Bausteinen herangezogen.

Der Erfindung liegt die Aufgabe zugrunde, einen Baustein der eingangs geschilderten Art zu schaffen, der unter geringerem Energieaufwand, also umweltschonender hergestellt werden kann, günstige Wärmedämmwerte aufweist, ein geringeres Gewicht besitzt und keine Abbindebeschleuniger benötigt.

Die Erfindung löst die gestellte Aufgabe dadurch, daß als Bindemittel ausschließlich natürlicher hydraulischer Kalk vorgesehen ist, der als Hauptbestandteil Calciumsilicat und Bicalciumsilicat sowie Siliziumdioxid und als Reste Magnesium-, Eisen-, Aluminium-, Kalium- und Natriumoxide umfaßt, aber noch 2 - 5 % freies Calciumoxid enthält und bei dem der vom Verhältnis der Summe der basischen Oxide einerseits und der sauren Oxide anderseits gebildete hydraulische Modul mindestens 1,9 beträgt, wobei der hydraulische Kalk vorzugsweise aus im italienischen Val die NonTrentino abgebauten Kalkstein gebrannt ist und die Brenntemperatur höchstens 950° C beträgt.
Da die Brenntemperatur des Kalkgesteines 950° C nicht überschreiten darf, ergibt sich die gewünschte Energieeinsparung. Wesentlich ist dabei aber, daß das Bindemittel noch 2 - 5 Gew. % freies Calciumoxid enthält, das mit dem Anmachwasser und dem Kohlendioxid der Luft reargiert und zu einem raschen Abbinden der gesamten Mischung führt. Da außer dem Calciumoxid noch die Hauptphasen von Calciumsilicat und Bicalciumsilicat sowie die Nebenbestandteile vorhanden sind, ergibt sich eine Mischung, die die erforderliche Festigkeit des Bausteines mit sich bringt, zumal der vom Verhältnis der Summe der basischen Oxide einerseits und der sauren Oxide anderseits gebildete hydraulische Modul mindestens 1,9 beträgt. Versuche haben ergeben, daß das erfindungsgemäße Bindemittel den wärmedämmenden Zuschlagstoff, also vorzugsweise den Naturbims mit einer Mantelschicht umgibt, die sich nur an den Berührungsstellen der einzelnen Zuschlagstoffkörner verbinden kann, die Hohlräume dazwischen aber freiläßt, so daß sich durch die Lufteinschlüsse in den Hohlräumen eine entsprechend gute Wärmedämmfähigkeit einstellt. Diese Hohlraumbildung hat im Zusammenhang mit dem gegenüber Zement geringeren spezifischen Gewicht des Bindemittels selbstverständlich auch eine entsprechende Gewichtsverminderung des Bausteines zur Folge und bringt eine gewünschte hohe Wasserdampfdurchlässigkeit mit sich.

Der Inhalt an aktivem Calciumoxid kann durch längere Lagerung vermindert werden, jedoch ist zu beachten, daß die Abbindung umso langsamer vor sich geht, je geringer der Gehalt an Calciumoxid ist. Die von der Bildung des Calciumsilicats bzw. Bicalciumsilicats abhängige Festigkeit der Verbindung und damit des Bausteines nimmt aber über lange Zeit zu.

Für den natürlichen hydraulischen Kalk, wie er aus dem im italienischen Val die Non-Trentino abgebauten Kalkstein bei höchstens 950° C gebrannt wird, ergeben sich etwa folgende Analysewerte:
- 2 - 5 Gew.%: freies Calciumoxid
- ca.50 Gew.%: Calciumsilicat und Bicalciumsilicat
- 1,7 Gew.%: Magnesiumoxid
- 2,8 Gew.%: Eisenoxid
- 23,9 Gew.%: Siliziumdioxid
- 3,1 Gew.%: Aluminiumoxid
- 1,4 Gew.%: Kaliumoxid
- 0,3 Gew.%: Natriumoxid

Das Schüttgewicht dieses hydraulischen Kalkes betragt 900 - 950 kg/m³. Da das Brennen dieses Kalkes unter der üblichen Sintertemperatur liegt, bleibt das Kalkkorn in wünschenswerter Weise offenporig.

Ausführungsbeispiel: 100 kg Naturbims mit einer Körnung von 1 bis 11 mm wurden mit 10 - 50 kg natürlichem hydraulischen Kalk und 6 - 24 l Wasser 1 - 3 min lang gemischt, in eine übliche Form für einen Baustein eingefüllt und verdichtet. Nach mindestens 24 h konnte die Entformung des Bausteines stattfinden, der nach etwa zwei Wochen Lagerzeit voll einsatzfähig war. Die Druckfestigkeit betrug 26 kg/cm², der Wärmedurchgangskoeffizient ca. 0,35 W/m²K.

## Patentansprüche

1. Baustein, der nur aus einem wärmedämmenden Zuschlagstoff, vorzugsweise Naturbims, und einem hydraulischen Bindemittel unter Verwendung von hydraulischem Kalk besteht, dadurch gekennzeichnet, daß als Bindemittel ausschließlich natürlicher hydraulischer Kalk vorgesehen ist, der als Hauptbestandteil Calciumsilicat und Bicalciumsilicat sowie Siliziumdioxid und als Reste Magnesium-, Eisen-, Aluminium-, Kalium- und Natriumoxide umfaßt, aber noch 2 - 5 % freies Calciumoxid enthält und bei dem der vom Verhältnis der Summe der basischen Oxide einerseits und der sauren Oxide anderseits gebildete hydraulische Modul mindestens 1,9 beträgt, wobei die Brenntemperatur höchstens 950° C beträgt und der hydraulische Kalk vorzugsweise aus im italienischen Val die NonTrentino abgebauten Kalkstein gebrannt ist.

## Claims

1. A building block consisting only of a heat-insulating aggregate, preferably natural pumice, and a hydraulic binder using hydraulic lime, characterised in that the binder is exclusively natural hydraulic lime containing calcium silicate, bicalcium silicate and silicon dioxide as the main component, remainder oxides of magnesium, iron, aluminium, potassium and sodium, and also containing 2-5% of free calcium oxide and wherein the hydraulic modulus formed by the ratio of the sum of the basic oxides on the one hand and the acid oxides on the other is at least 1.9, the calcining temperature being not more than 950°C and the hydraulic lime preferably being calcined from limestone quarried in the NonTrentino in the Italian Val.

## Revendications

1. Bloc de construction, constitué seulement d'un additif isolant de la chaleur, de préférence de pierre ponce naturelle et d'un liant hydraulique, avec utilisation de chaux hydraulique, caractérisé en ce qu'est prévu comme liant exclusivement de la chaux hydraulique naturelle qui comprend à titre de composant principal du silicate de calcium et du bisilicate de calcium ainsi que du dioxyde de silicium et, pour le reste, des oxydes de magnésium, de fer, d'aluminium, de potassium et de sodium, mais contient encore de 2 à 5 % d'oxyde de calcium libre et pour lequel le module hydraulique constitué par le rapport entre la somme des oxydes basiques, d'une part, et des oxydes acides, d'autre part, est d'au moins 1,9, la température de cuisson étant au maximum de 950 °C et la chaux hydraulique provenant de préférence de la chaux extraite de la carrière italienne Val die Non Trentino.
